# EUROPEAN PATENT SPECIFICATION

(11) **EP 4 417 453 B1**
(45) Date of publication and mention of the grant of the patent: **27.08.2025**
(21) Application number: 23156860.1
(22) Date of filing: 15.02.2023
(51) Int. Cl.: B60K 15/03

(54) **A FUEL GAS TANK ARRANGEMENT AND A METHOD FOR SAFETY VENTILATION OF FUEL GAS FROM THE FUEL GAS TANK ARRANGEMENT**
BRENNGASTANKANORDNUNG UND VERFAHREN ZUR SICHERHEITSVENTILATION VON BRENNGAS AUS DER BRENNGASTANKANORDNUNG
AGENCEMENT DE RÉSERVOIR DE GAZ COMBUSTIBLE ET PROCÉDÉ DE VENTILATION DE SÉCURITÉ DE GAZ COMBUSTIBLE À PARTIR DE L'AGENCEMENT DE RÉSERVOIR DE GAZ COMBUSTIBLE

(43) Date of publication of application: 21.08.2024
(73) Proprietor: VOLVO TRUCK CORPORATION, 405 08 Göteborg (SE)
(72) Inventor: Bhavani Shankar, Vijai Shankar, 414 78 Göteborg (SE); Blomgren, Fredrik, 425 35 Kärra (SE)
(74) Representative: Kransell & Wennborg KB

(56) References cited:
- SE-A1- 1 751 505
- SE-A1- 2 150 460
- SE-C2- 540 378
- US-A1- 2021 324 819
- US-B2- 10 465 630

## Description

### TECHNICAL FIELD

The invention relates generally to safety-release of fuel gas. In particular aspects, the invention relates to a fuel gas tank arrangement and to a computer-implemented method for safety ventilation of fuel gas from the fuel gas tank arrangement. The invention can be applied in heavy-duty vehicles, such as trucks, buses, and construction equipment. Although the invention may be described with respect to a particular vehicle, the invention is not restricted to any particular vehicle.

### BACKGROUND

Fuel gas, such as hydrogen or natural gas, as a fuel source for electric vehicles is stored at high pressure. Tanks holding pressurized fuel gas onboard vehicles can be a safety hazard, especially at thermal runaway of an electric energy storage system of the vehicle. Thermal runaway of an electric energy storage system is a process where heat propagates through multiple cells of a battery pack, which process is accelerated by increased temperature, in turn releasing energy that further increases temperature. Thermal runaway occurs in situations where an increase in temperature changes the conditions in a way that causes a further increase in temperature, often leading to a destructive result. Following development of electrically driven vehicles, electric energy storage systems are increasingly part of vehicles' powertrain systems.

Fuel gas tanks are often equipped with temperature-pressure relief valves. These safety valves rupture if the temperature, and consequently the pressure in the tank, increases above a threshold value. The pressure release is very abrupt and uncontrolled. A fuel gas tank arrangement according to the preamble of claim1 is known from US 2021/324819.

### SUMMARY

According to a first aspect of the invention, there is provided a fuel gas tank arrangement in a vehicle. The fuel gas tank arrangement comprises a fuel gas tank for holding a pressurized fuel gas volume and a valve configured to ventilate fuel gas from the fuel gas tank into ambient surroundings. The valve comprises a controllable valve actuator communicatively connected to a control unit. The valve actuator is configured to open the valve to a determined opening degree for controlling a flow rate of ventilated fuel gas. The first aspect of the invention may seek to control ventilation of fuel gas from the fuel gas tank such that fuel gas is released in a controlled manner with regard to specifications of the fuel gas tank arrangement and a measured status of a fuel gas volume. A technical benefit may include that fuel gas is ventilated safely instead of being ventilated in an uncontrolled manner, which could increase the fire hazard. An additional benefit may be that fuel gas is ventilated only until the fire hazard is avoided such that fuel gas may be saved instead of being wasted. Fuel gas may be ventilated initially to a first extent, whereafter flow rate may be adjusted as the situation changes.

The fuel gas volume is to be understood as a (variable) amount of fuel gas contained in the fuel gas tank. The fuel gas volume may be in liquid form or gas form, or a combination thereof. Under normal operating conditions, the fuel gas volume is pressurized and/or cooled.

The control unit which communicates with/controls the valve actuator may be a tank control unit, an electric energy storage system control unit (e.g. a battery management unit), a vehicle control unit and/or an engine control unit, etc. The control unit may receive a signal indicating an imminent or occurring thermal runaway of the electric energy storage system. The signal may originate from a battery management unit. The signal may be directly received by the control unit or received through a vehicle control unit. Once the signal is received, the control unit may initiate opening of the valve that ventilates the fuel gas (hydrogen or other gaseous fuel) into the ambience outside the fuel gas tank. The position of the valve can be controlled to release the gas at a flow rate based on the required time of emptying, the initial state of the tank, and the characteristics of the tank.

In some examples, the fuel gas tank arrangement further comprises a sensor assembly configured to measure a status of the fuel gas volume. A technical benefit may include to collect data on a fuel gas pressure, a fuel gas temperature, a gas composition, a fuel gas mass, and/or ambient temperature of the fuel gas tank such that a ventilation flow rate may be controlled by adjusting the opening degree of the valve. The ambient temperature of the fuel gas tank is herein to be understood as the temperature of an environment in which the fuel gas tank is positioned.

According to a second aspect of the invention, there is provided a computer-implemented method for safety ventilation of fuel gas from a fuel gas tank arrangement into ambient surroundings. The fuel gas tank arrangement comprises a fuel gas tank comprising a pressurized fuel gas volume and a valve comprising a controllable valve actuator communicatively connected to a control unit. The valve actuator is configured to open and/or close the valve. The method comprises, by the control unit of a computer system, receiving data on an imminent or occurring thermal runaway of an electric energy storage system. The method further comprises controlling the valve actuator to open the valve to release an amount of fuel gas from the fuel gas tank. The second aspect of the invention may seek to, in a controlled manner, ventilate fuel gas from the fuel gas arrangement when there is an imminent or occurring thermal runaway in the electric energy storage system. As described in conjunction with the first aspect of the invention, a technical benefit may include that fuel gas is ventilated safely instead of being ventilated in an uncontrolled manner, which could increase the fire hazard. An additional benefit may be that fuel gas is ventilated only until the fire hazard is avoided such that fuel gas may be saved instead of being wasted. Fuel gas may be initially ventilated to a first extent, whereafter a flow rate may be adjusted as the situation changes.

In some examples, the method further comprises estimating a risk of ignition of the fuel gas volume based on the received data. A technical benefit may include controlling the release of fuel gas in accordance with the received data on the imminent or occurring thermal runaway. Release of fuel gas may increase if a temperature of the thermal runaway increases. Release of fuel gas may decrease if a temperature of the thermal runaway decreases, such as if the thermal runaway of the electric energy storage system has been contained. A basic aim of the method is to ventilate fuel gas as slowly as possible, both for saving fuel gas and because depressurized fuel gas may increase in temperature, which may increase the risk of ignition, especially if released quickly in large amounts.

In some examples, the method further comprises determining a target opening degree of the valve to control a flow rate of ventilated fuel gas based on the estimated risk of ignition. As mentioned hereinabove, the flow rate may be controlled, i.e. increased or decreased by opening the valve to a target opening degree, which is determined by the estimated risk of ignition of the fuel gas volume, which in turn is based on the received data. The data may be received from a control unit, such as an electric energy storage system control unit, e.g. a battery management unit and/or from a vehicle control unit, e.g. an engine control unit. As above, a technical benefit may include, that fuel gas is ventilated safely instead of being ventilated in an uncontrolled manner, which could increase the fire hazard. An additional benefit may be that fuel gas is ventilated only until the fire hazard is avoided such that fuel gas may be saved instead of being wasted. Fuel gas may be initially ventilated to a first extent, whereafter a flow rate may be adjusted as the situation changes.

In some examples, the target opening degree of the valve is further based on registered data on at least one of a valve dimension and/or a volume of the fuel gas tank. The registered data thus comprises stored information about certain properties of the fuel gas tank arrangement. The properties may indicate how much the valve may be opened and what flow rate is possible. The properties may also indicate how much fuel gas the fuel gas tank may contain and give an indication of how the target opening degree of the valve should be adjusted to correspond to the risk of ignition of the fuel gas volume.

In some examples, the risk of ignition is further based on a measured status of the fuel gas volume, the status comprising data on at least one of a fuel gas pressure, a fuel gas temperature, a gas composition, a fuel gas mass, and/or ambient temperature of the fuel gas tank. The measured status may thus be an updated, current status of the fuel gas volume, comprising measured data on the above parameters. By measuring the status, the risk of ignition of the fuel gas volume may be more accurately determined and the target opening degree of the valve may be adjusted accordingly.

In some examples, the risk of ignition is further based on registered data on characteristics of the fuel gas tank, which characteristics comprise data on at least one of a structure of the fuel gas tank comprising the fuel gas volume, a fuel gas tank material, presence of a temperature/pressure relief device, an orientation of the fuel gas tank, and/or a relative position of the fuel gas tank. The characteristics of the fuel gas tank may further determine the risk of ignition. The structure of the fuel gas tank may increase or decrease the risk of ignition and the material of the fuel gas tank may determine heat transfer to the fuel gas volume in the fuel gas tank. The fuel gas tank arrangement may also be provided with a temperature and pressure relief valve which would open at a predetermined pressure and/or temperature. To control the flow rate of ventilated fuel gas it is thus important to seek to keep the temperature and the pressure of the fuel gas volume below the predetermined temperature and pressure of the temperature and pressure relief valve. The temperature and pressure relief valve may be a last-resort solution to avoid a catastrophic explosion of the fuel gas tank. The orientation and relative position of the fuel gas tank may also determine the risk of ignition in that they affect the flow field of ventilated fuel gas such that the ventilated fuel gas may exit the fuel gas tank near, or in the direction of, the electric energy storage system in thermal runaway.

In some examples, the method further comprises closing the valve if the estimated risk of ignition is below a predetermined threshold value. Accordingly, if the thermal runaway has been contained, and/or the risk of ignition is low, fuel gas may be kept inside the fuel gas tank. However, if the estimated risk of ignition does not fall below the threshold value, ventilation continues until the fuel gas tank is substantially empty.

According to a third aspect of the invention, there is provided a control unit comprising a processor device configured to perform the method according to the second aspect of the invention. The control unit is mainly intended to receive data on any imminent or occurring thermal runaway and to control the valve actuator to open the valve to the determined opening degree, which depends on the risk of ignition of the fuel gas volume. The control unit may be a tank control unit comprised in the fuel gas tank arrangement. Alternatively, the control unit may be any other control unit of a vehicle comprising the fuel gas tank arrangement, where the control unit is communicatively connected to the valve actuator. The processor device of the control unit may estimate the risk of ignition according to any of the embodiments of the method of the invention.

According to a fourth aspect of the invention, there is provided a computer program product comprising program code for performing, when executed by the processor device of the third aspect of the invention, the method of any of the embodiments of the second aspect of the invention.

According to a fifth aspect of the invention, there is provided a control system comprising one or more control units configured to perform the method of any of the embodiments of the second aspect of the invention.

According to a sixth aspect of the invention, there is provided a non-transitory computer-readable storage medium comprising instructions, which when executed by the processor device of the fourth aspect of the invention, cause the processor device to perform the method of any of the embodiments of the second aspect of the invention.

According to seventh aspect of the invention, there is provided a vehicle comprising the fuel gas tank arrangement according to any of the embodiments of the first aspect of the invention and the control unit according to claim according to the third aspect of the invention.

In some examples, the vehicle further comprises an electric energy storage system and an electric energy storage system control unit communicatively connected with the fuel gas tank arrangement.

Additional features and advantages are disclosed in the following description, claims, and drawings, and in part will be readily apparent therefrom to those skilled in the art or recognized by practicing the invention as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the invention cited as examples.
**FIG. 1** is an exemplary side view of a vehicle according to one example.
**FIG. 2** is an exemplary conceptual view of a fuel gas tank arrangement according to an example.
**FIG. 3** is an exemplary schematic view of a control system according to an example.
**FIG. 4** is an exemplary flowchart of a method according to an example.
**FIG. 5** is a schematic diagram of an exemplary computer system for implementing examples disclosed herein, according to one example

### DETAILED DESCRIPTION

Aspects set forth below represent the necessary information to enable those skilled in the art to practice the invention.

The present invention provides a fuel gas tank arrangement and a method for ventilation of fuel gas from the fuel gas tank arrangement. Upon receipt of an indication of an imminent or occurring thermal runaway of an electric energy storage system, a valve actuator is controlled to open a valve and to release an amount of fuel gas from a fuel gas tank of the fuel gas tank arrangement. The present invention provides an improved arrangement and method in that flow rate of the ventilated fuel gas is controlled and may be adjusted depending on changing circumstances of the thermal runaway and conditions of the fuel gas tank arrangement.

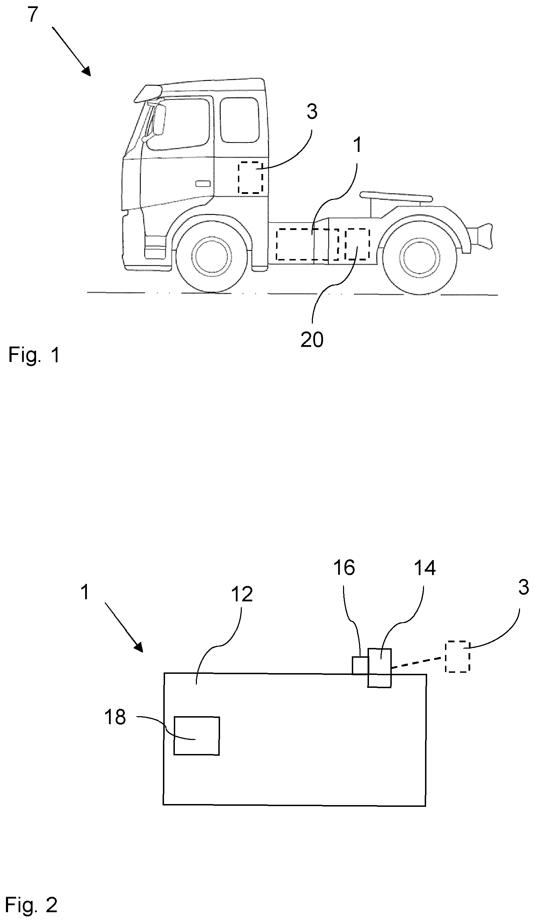

**FIG. 1** is an exemplary vehicle 7 according to one example of the invention. The vehicle comprises an electric energy storage system 20, such as a battery, or battery pack. A fuel source of the vehicle 7 is fuel gas, e.g. hydrogen or natural gas. The vehicle 7 may be a fuel cell electric vehicle comprising one or more electric motors for propulsion of the vehicle or a hybrid vehicle comprising a combustion engine configured to use the fuel gas for combustion, and an electric motor for propulsion of the vehicle. For this purpose, the vehicle 7 comprises a fuel gas tank arrangement 1 and a control unit 3 configured to perform ventilation of fuel gas from the fuel gas tank arrangement 1.

The control unit 3 may be a tank control unit, an electric energy storage system control unit (e.g. a battery management unit), a vehicle control unit and/or an engine control unit, etc. According to an aspect of the invention, there may also be provided a control system comprising one or more control units 3. The control unit 3 may receive a signal indicating an imminent or occurring thermal runaway of the electric energy storage system 20. The signal may originate from a battery management unit, such as a control unit of the electric energy storage system 20. The signal may be directly received by the control unit 3 or received through a vehicle control unit. Once the signal is received, the control unit 3 may initiate opening of the valve 14 that ventilates the fuel gas (hydrogen or other gaseous fuel) into the ambience outside the fuel gas tank 12. An opening position of the valve can be controlled to release the gas at a flow rate based on the required time of emptying the fuel gas tank 12, a status of the fuel gas tank 12, and/or the characteristics of the fuel gas tank 12.

**FIG. 2** illustrates the fuel gas tank arrangement 1, which comprises a fuel gas tank 12 for holding a pressurized fuel gas volume, and a valve 14 configured to ventilate fuel gas from the fuel gas tank 12 into ambient surroundings of the fuel gas tank 12. The valve 14 comprises a controllable valve actuator 16 communicatively connected to the control unit 3 comprised by the vehicle 7. The control unit 3 is shown in dashed lines to illustrate that it is optionally comprised in the fuel gas tank arrangement 1. The valve actuator 16 is configured to open the valve 14 to a determined opening degree for controlling a flow rate of ventilated fuel gas.

The fuel gas tank arrangement 1 may comprise a sensor assembly 18 configured to measure a status of the fuel gas volume contained in the fuel gas tank 12. The sensor assembly 18 may be configured to collect measurable data on a fuel gas pressure, a fuel gas temperature, a fuel gas composition, a fuel gas mass, and/or ambient temperature of the fuel gas tank 12 such that a ventilation flow rate may be controlled by adjusting an opening degree of the valve 14 in accordance with the present status of the fuel gas volume. For instance, a high temperature and/or a high pressure of the fuel gas volume in the fuel gas tank 12 indicate that a risk of ignition is relatively high. Therefore, fuel gas should be ventilated before the thermal runaway is worsened. However, a temperature increase caused by depressurized fuel gas, and/or other factors such as flow field of the ventilated fuel gas may also need to be considered. The sensor assembly 18 may be communicatively connected to the control unit 3. The control unit 3 is configured to collect data and use available information to determine a target opening degree of the valve 14.

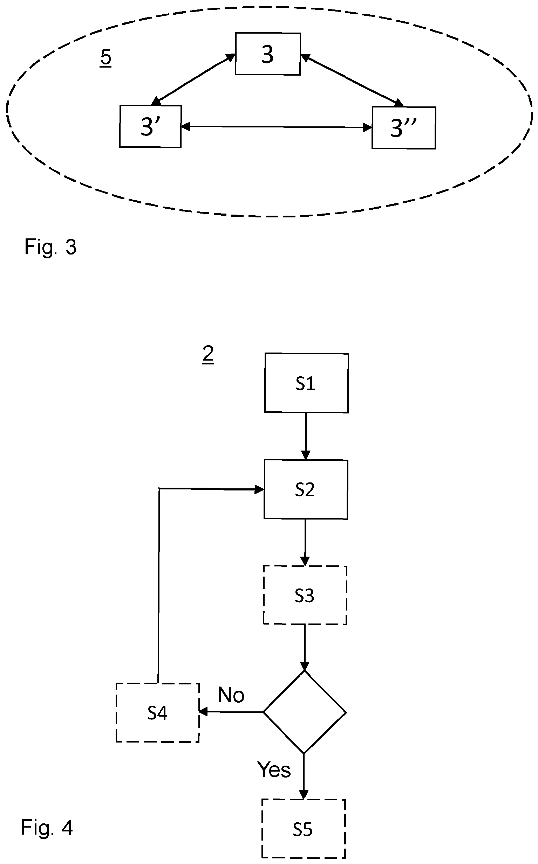

**FIG. 4** shows a flowchart of a method 2 according to a second aspect of the invention. There is thus provided a computer-implemented method 2 for safety ventilation of fuel gas from a fuel gas tank arrangement 1 into ambient surroundings. The fuel gas tank arrangement 1 comprises a fuel gas tank 12 comprising a pressurized fuel gas volume and a valve 14 comprising a controllable valve actuator 16 communicatively connected to a control unit 3, such as illustrated in FIG. 2. The valve actuator 16 is configured to open and/or close the valve 14. The method 2 comprises, by the control unit 3 of a computer system 400:
- S1: receiving data on an imminent or occurring thermal runaway of an electric energy storage system 20,
- S2: controlling the valve actuator 16 to open the valve 14 to release an amount of fuel gas from the fuel gas tank 12.

The method 2 allows, in a controlled manner, to ventilate fuel gas from the fuel gas tank arrangement 1 when there is an imminent or occurring thermal runaway in the electric energy storage system 20. The electric energy storage system 20 is usually not comprised in the fuel gas tank arrangement 1. However, the control unit 3 may be communicatively connected to a control unit of the electric energy storage system, such as a battery management unit 3', or to a control unit of the vehicle 7, such as an engine control unit 3''. The control unit 3 directly controlling the valve actuator 16 may alternatively be the control unit of the electric energy storage system, such as the battery management unit 3', or the control unit of the vehicle 7, such as the engine control unit 3''. As shown in **FIG. 3****,** the control unit 3 may thus be a part of a control system 5 comprising one or more control units 3, 3', 3'' configured to perform the method 2. The one or more control units 3, 3', 3'' are communicatively connected to each other and configured to send, receive and/ process information and/or data to control and perform various functions.

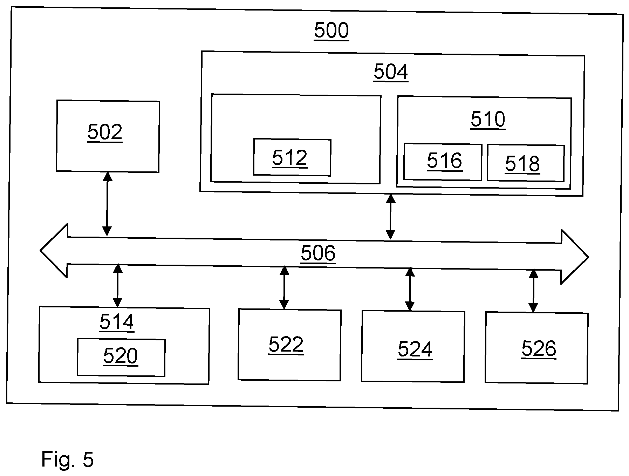

The control unit 3 may comprise a processor device 502 (see **FIG. 5**) configured to perform the method 2 of the second aspect of the invention. The control unit 3 of the fuel gas tank arrangement 1 is mainly intended to receive data on any imminent or occurring thermal runaway and to control the valve actuator 16 to open the valve 14 to a determined opening degree, which depends on the risk of ignition of the fuel gas volume. The processor device 502 of the control unit 3 may estimate the risk of ignition according to any of the embodiments of the second aspect of the invention.

Fuel gas may thereby be ventilated safely instead of being ventilated in an uncontrolled manner, which could increase the fire hazard. Additionally, fuel gas may be ventilated only until the fire hazard is avoided such that fuel gas may be saved instead of being wasted. Fuel gas may be initially ventilated to a first extent, whereafter a flow rate may be adjusted as the situation changes.

The method 2 may comprise an action S3 of estimating a risk of ignition of the fuel gas volume based on the received data on the imminent or occurring thermal runaway. Depending on the received data, the fuel gas may be released at different flow rates. Release of fuel gas may increase if a temperature of the thermal runaway increases, such as if the thermal runaway is worsening. Release of fuel gas may decrease if a temperature of the thermal runaway decreases, such as if the thermal runaway of the electric energy storage system 20 has been contained. Basically, an aim of the method 2 is to ventilate fuel gas as slowly as possible, both for saving fuel gas and because depressurized fuel gas may increase in temperature, which may further increase the risk of ignition, especially if released quickly in large amounts.

The method 2 may further comprise an action S4 of determining a target opening degree of the valve 14 to control a flow rate of ventilated fuel gas based on the estimated risk of ignition. The flow rate may thus be controlled, i.e. increased or decreased by opening the valve to a target opening degree, which is determined by the estimated risk of ignition of the fuel gas volume, which in turn is based on the received data. The data may be received from a control unit, such as an electric energy storage system control unit, e.g. a battery management unit and/or from a vehicle control unit, e.g. an engine control unit. As mentioned hereinbefore, fuel gas may be ventilated safely instead of being ventilated in an uncontrolled manner, which could increase the fire hazard. Further, fuel gas may be ventilated only until the fire hazard is avoided such that fuel gas may be saved instead of being wasted. Fuel gas may be initially ventilated to a first extent, whereafter a flow rate may be adjusted as the situation changes.

The target opening degree of the valve 14 may further be based on registered data on at least one of a valve dimension and/or a volume of the fuel gas tank 12. The registered data may comprise stored information about certain properties of the fuel gas tank arrangement 1. The properties may indicate how much the valve may be opened and what flow rate is physically possible. The properties may also indicate how much fuel gas the fuel gas tank 12 may contain and give an indication of how the target opening degree of the valve 14 should be adjusted to correspond to the risk of ignition of the fuel gas volume.

The risk of ignition may further be based on a measured status of the fuel gas volume. The status may comprise data on at least one of a fuel gas pressure, a fuel gas temperature, a gas composition, a fuel gas mass, and/or ambient temperature of the fuel gas tank 12. The measured status may thus be an updated, current status of the fuel gas volume, comprising measured data on the above parameters. By measuring the status, the risk of ignition of the fuel gas volume may be more accurately determined and the target opening degree of the valve may be adjusted accordingly. The status may be measured continuously or intermittently during normal operation of the fuel gas tank arrangement and/or after receiving data on the imminent or occurring thermal runaway of the electric energy storage system 20.

The risk of ignition may further be based on registered data on characteristics of the fuel gas tank 12. The characteristics of the fuel tank 12 may comprise data on at least one of a structure of the fuel gas tank 12 comprising the fuel gas volume, a fuel gas tank material, presence of a temperature/pressure relief device, an orientation of the fuel gas tank 12, and/or a relative position of the fuel gas tank 12.

The structure of the fuel gas tank may increase or decrease the risk of ignition in that it may affect a heat transfer rate between a heat source outside the tank (i.e. ambient temperature) and the fuel gas volume inside the tank. The material of the fuel gas tank may also determine heat transfer to the fuel gas volume inside the fuel gas tank. The orientation and relative position of the fuel gas tank may also affect the risk of ignition in that they, to some extent, determine the flow field of ventilated fuel gas such that the ventilated fuel gas may exit the fuel gas tank near, or in the direction of, the electric energy storage system 20 during thermal runaway.

The fuel gas tank arrangement may optionally be provided with a temperature and pressure relief valve (not shown) which would open at a predetermined pressure and/or temperature. To control the flow rate of ventilated fuel gas via the valve 14 it is thus important to attempt to keep the temperature and the pressure of the fuel gas volume below the predetermined temperature and pressure of the temperature and pressure relief valve. The temperature and pressure relieve valve may be a last-resort solution to avoid a catastrophic explosion of the fuel gas tank.

The method 2 may further comprise an action of closing the valve 14 if the estimated risk of ignition is below a predetermined threshold value. Consequently, if the thermal runaway has been contained, and/or the risk of ignition is low, fuel gas may be kept inside the fuel gas tank 12. However, if the estimated risk of ignition does not fall below the threshold value, ventilation continues at a higher or lower flow rate until the fuel gas tank 12 is substantially empty.

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include a processor device **502** (may also be referred to as a control unit), a memory **504,** and a system bus **506.** The computer system **500** may include at least one computing device having the processor device **502.** The system bus **506** provides an interface for system components including, but not limited to, the memory **504** and the processor device **502.** The processor device **502** may include any number of hardware components for conducting data or signal processing or for executing computer code stored in memory **504.** The processor device **502** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processor device **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with a processor device **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program product **520** stored on a transitory or non-transitory computer-usable or computer-readable storage medium (e.g., single medium or multiple media), such as the storage device **514,** which includes complex programming instructions (e.g., complex computer-readable program code) to cause the processor device **502** to carry out the steps described herein. Thus, the computer-readable program code can comprise software instructions for implementing the functionality of the examples described herein when executed by the processor device **502.** The processor device **502** may serve as a controller or control system for the computer system **500** that is to implement the functionality described herein.

The computer system **500** also may include an input device interface **522** (e.g., input device interface and/or output device interface). The input device interface **522** may be configured to receive input and selections to be communicated to the computer system **500** when executing instructions, such as from a keyboard, mouse, touch-sensitive surface, etc. Such input devices may be connected to the processor device **502** through the input device interface **522** coupled to the system bus **506** but can be connected through other interfaces such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may also include a communications interface **526** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

In the drawings and specification, there have been disclosed aspects for purposes of illustration only and not for purposes of limitation, the scope of the inventive concepts being set forth in the following claims.

## Claims

1. A fuel gas tank arrangement (1) in a vehicle (7), the fuel gas tank arrangement (1) comprising:
- a fuel gas tank (12) for holding a pressurized fuel gas volume, and
- a valve (14) configured to ventilate fuel gas from the fuel gas tank (12) into ambient surroundings,
**characterized in that**
the valve (14) comprises a controllable valve actuator (16) communicatively connected to a control unit (3), the valve actuator (16) being configured to open the valve (14) to a determined opening degree for controlling a flow rate of ventilated fuel gas.

2. The fuel gas tank arrangement (1) of claim 1, further comprising a sensor assembly (18) configured to measure a status of the fuel gas volume.

3. The fuel gas tank arrangement (1) of claim 2, wherein the status of the fuel gas volume comprises measurable data on at least one of a fuel gas pressure, a fuel gas temperature, and/or a fuel gas mass.

4. A computer-implemented method (2) for safety ventilation of fuel gas from a fuel gas tank arrangement (1) into ambient surroundings, the fuel gas tank arrangement (1) comprising a fuel gas tank (12) comprising a pressurized fuel gas volume and a valve (14) comprising a controllable valve actuator (16) communicatively connected to a control unit (3), the valve actuator (16) being configured to open and/or close the valve (14), the method (2) comprising, by the control unit (3) of a computer system (400):
- receiving (S1) data on an imminent or occurring thermal runaway of an electric energy storage system (20),
- controlling (S2) the valve actuator (16) to open the valve (14) to release an amount of fuel gas from the fuel gas tank (12).

5. The method (2) according to claim 5, further comprising estimating (S3) a risk of ignition of the fuel gas volume based on the received data.

6. The method (2) of claim 5, further comprising determining (S4) a target opening degree of the valve (14) to control a flow rate of ventilated fuel gas based on the estimated risk of ignition.

7. The method (2) of claim 6, wherein the target opening degree of the valve (14) is further based on registered data on at least one of a valve dimension and/or a volume of the fuel gas tank (12).

8. The method (2) of any one of claims 5-7, wherein the risk of ignition is further based on a measured status of the fuel gas volume, the status comprising data on at least one of a fuel gas pressure, a fuel gas temperature, a gas composition, a fuel gas mass, and/or ambient temperature of the fuel gas tank (12).

9. The method (2) of any one of claims 5-8, wherein the risk of ignition is further based on registered data on characteristics of the fuel gas tank (12), which characteristics comprise data on at least one of a structure of the fuel gas tank (12) comprising the fuel gas volume, a fuel gas tank material, presence of a temperature/pressure relief device, an orientation of the fuel gas tank (12), and/or a relative position of the fuel gas tank (12).

10. The method (2) of any one of the claims 5-9, further comprising closing (S5) the valve (14) if the estimated risk of ignition is below a predetermined threshold value.

11. A control unit (3) comprising a processor device (502) configured to perform the method (2) according to any of claims 4-10.

12. A computer program product (520) comprising program code for performing, when executed by the processor device (502) of claim 11, the method (2) of any of claims 4-10.

13. A control system (5) comprising one or more control units (3) configured to perform the method of any of claims 4-10.

14. A non-transitory computer-readable storage medium (514) comprising instructions, which when executed by the processor device (502) of claim 11, cause the processor device (502) to perform the method (2) of any of claims 4-10.

15. A vehicle (7) comprising the fuel gas tank arrangement (1) according to any of claims 1-3 and the control unit (3) according to claim 11.

16. The vehicle (7) of claim 14, further having an electric energy storage system (20) and an electric energy storage system control unit (22) communicatively connected with the fuel gas tank arrangement (1).

## Patentansprüche

1. Brenngastankanordnung (1) in einem Fahrzeug (7), die Brenngastankanordnung (1) umfassend:
- einen Brenngastank (12) zur Aufnahme eines unter Druck stehenden Brenngasvolumens, und
- ein Ventil (14), das konfiguriert ist, um Brenngas aus dem Brenngastank (12) in die Umgebung zu ventilieren,
**dadurch gekennzeichnet, dass**
das Ventil (14) einen steuerbaren Ventilaktuator (16) umfasst, der kommunikativ mit einer Steuereinheit (3) verbunden ist, wobei der Ventilaktuator (16) konfiguriert ist, um das Ventil (14) bis zu einem bestimmten Öffnungsgrad zu öffnen, um eine Durchflussrate von ventiliertem Brenngas zu steuern.

2. Brenngastankanordnung (1) nach Anspruch 1, ferner umfassend eine Sensoranordnung (18), die konfiguriert ist, um einen Status des Brenngasvolumens zu messen.

3. Brenngastankanordnung (1) nach Anspruch 2, wobei der Status des Brenngasvolumens messbare Daten über mindestens einen Brenngasdruck, eine Brenngastemperatur und/oder eine Brenngasmasse umfasst.

4. Computer-implementiertes Verfahren (2) zur Sicherheitsventilation von Brenngas aus einer Brenngastankanordnung (1) in die Umgebung, die Brenngastankanordnung (1) umfassend einen Brenngastank (12) mit einem unter Druck stehenden Brenngasvolumen und ein Ventil (14) mit einem steuerbaren Ventilaktuator (16), das kommunikativ mit einer Steuereinheit (3) verbunden ist, wobei der Ventilaktuator (16) konfiguriert ist, um das Ventil (14) zu öffnen und/oder zu schließen, wobei das Verfahren (2) durch die Steuereinheit (3) eines Computersystems (400) umfasst:
- Empfangen (S1) von Daten über ein drohendes oder eingetretenes thermisches Durchgehen eines elektrischen Energiespeichersystems (20),
- Steuern (S2) des Ventilaktuators (16), um das Ventil (14) zu öffnen, um eine bestimmte Menge Brenngas aus dem Brenngastank (12) freizugeben.

5. Verfahren (2) nach Anspruch 5, ferner umfassend die Schätzung (S3) eines Entzündungsrisikos des Brenngasvolumens auf der Grundlage der empfangenen Daten.

6. Verfahren (2) nach Anspruch 5, ferner umfassend das Bestimmen (S4) eines Zielöffnungsgrads des Ventils (14), um eine Durchflussrate von ventiliertem Brenngas auf der Grundlage des geschätzten Entzündungsrisikos zu steuern.

7. Verfahren (2) nach Anspruch 6, wobei der Zielöffnungsgrad des Ventils (14) ferner auf registrierten Daten zu mindestens einer Ventilabmessung und/oder einem Volumen des Brenngastanks (12) basiert.

8. Verfahren (2) nach einem der Ansprüche 5-7, wobei das Entzündungsrisiko ferner auf einem gemessenen Status des Brenngasvolumens basiert, wobei der Status Daten über mindestens einen Brenngasdruck, eine Brenngastemperatur, eine Gaszusammensetzung, eine Brenngasmasse und/oder die Umgebungstemperatur des Brenngastanks (12) umfasst.

9. Verfahren (2) nach einem der Ansprüche 5-8, wobei das Entzündungsrisiko ferner auf registrierten Daten über Merkmale des Brenngastanks (12) basiert, wobei die Merkmale Daten über mindestens eine der folgenden Eigenschaften umfassen: eine Struktur des Brenngastanks (12), die das Brenngasvolumen umfasst, ein Brenngastankmaterial, das Vorhandensein einer Temperatur-/Druckentlastungsvorrichtung, eine Ausrichtung des Brenngastanks (12) und/oder eine relative Position des Brenngastanks (12).

10. Verfahren (2) nach einem der Ansprüche 5-9, ferner umfassend das Schließen (S5) des Ventils (14), wenn das geschätzte Entzündungsrisiko unter einem vorbestimmten Schwellenwert liegt.

11. Steuereinheit (3) umfassend eine Prozessorvorrichtung (502), die konfiguriert ist, um das Verfahren (2) nach einem der Ansprüche 4-10 durchzuführen.

12. Computerprogrammprodukt (520) umfassend einen Programmcode zum Durchführen des Verfahrens (2) nach einem der Ansprüche 4-10, wenn es von einer Prozessorvorrichtung (502) nach Anspruch 11 ausgeführt wird.

13. Steuerungssystem (5) umfassend eine oder mehrere Steuereinheiten (3), die konfiguriert sind, um das Verfahren nach einem der Ansprüche 4-10 durchzuführen.

14. Nicht-transitorisches computerlesbares Speichermedium (514), das Anweisungen umfasst, die, wenn sie von einer Prozessorvorrichtung (502) nach Anspruch 11 ausgeführt werden, die Prozessorvorrichtung (502) veranlassen, das Verfahren (2) nach einem der Ansprüche 4-10 durchzuführen.

15. Fahrzeug (7) umfassend die Brenngastankanordnung (1) nach einem der Ansprüche 1-3 und die Steuereinheit (3) nach Anspruch 11.

16. Fahrzeug (7) nach Anspruch 14, das ferner ein elektrisches Energiespeichersystem (20) und eine Steuereinheit für das elektrische Energiespeichersystem (22) aufweist, die mit der Brenngastankanordnung (1) kommunikativ in Verbindung steht.

## Revendications

1. Agencement de réservoir de gaz combustible (1) dans un véhicule (7), le système de réservoir de gaz combustible (1) comprenant :
- un réservoir de gaz combustible (12) destiné à contenir un volume de gaz combustible sous pression, et
- une soupape (14) configurée pour ventiler le gaz combustible du réservoir de gaz combustible (12) dans l'environnement ambiant,
**caractérisé en ce que**
la soupape (14) comprend un actionneur de soupape commandable (16) relié de manière à communiquer avec une unité de commande (3), l'actionneur de soupape (16) étant configuré pour ouvrir la soupape (14) à un degré d'ouverture déterminé pour réguler un débit de gaz combustible ventilé.

2. Agencement de réservoir de gaz combustible (1) selon la revendication 1, comprenant en outre un ensemble capteur (18) configuré pour mesurer un état du volume de gaz combustible.

3. Agencement de réservoir de gaz combustible (1) selon la revendication 2, dans lequel l'état du volume de gaz combustible comprend des données mesurables sur au moins un paramètre parmi une pression de gaz combustible, une température de gaz combustible et/ou une masse de gaz combustible.

4. Procédé informatisé (2) de ventilation de sécurité de gaz combustible provenant d'un agencement de réservoir de gaz combustible (1) dans un environnement ambiant, l'agencement de réservoir de gaz combustible (1) comprenant un réservoir de gaz combustible (12) comprenant un volume de gaz combustible sous pression et une soupape (14) comprenant un actionneur de soupape commandable (16) relié en communication à une unité de commande (3), l'actionneur de soupape (16) étant configuré pour ouvrir et/ou fermer la soupape (14), le procédé (2) comprenant, par l'intermédiaire de l'unité de commande (3) d'un système informatique (400) :
- la réception (S1) de données sur une fuite thermique imminente ou en cours d'un système de stockage d'énergie électrique (20),
- la commande (S2) de l'actionneur de soupape (16) pour ouvrir la soupape (14) afin de libérer une quantité de gaz combustible du réservoir de gaz combustible (12).

5. Procédé (2) selon la revendication 5, comprenant en outre l'estimation (S3) d'un risque d'inflammation du volume de gaz combustible sur la base des données reçues.

6. Procédé (2) selon la revendication 5, comprenant en outre la détermination (S4) d'un degré d'ouverture cible de la soupape (14) pour commander un débit de gaz combustible ventilé sur la base du risque estimé d'inflammation.

7. Procédé (2) selon la revendication 6, dans lequel le degré d'ouverture cible de la soupape (14) est en outre basé sur des données enregistrées sur au moins l'un d'une dimension de soupape et/ou d'un volume du réservoir de gaz combustible (12).

8. Procédé (2) selon l'une quelconque des revendications 5 à 7, dans lequel le risque d'inflammation est en outre basé sur un état mesuré du volume de gaz combustible, l'état comprenant des données sur au moins l'un d'une pression de gaz combustible, d'une température de gaz combustible, d'une composition de gaz, d'une masse de gaz combustible et/ou d'une température ambiante du réservoir de gaz combustible (12).

9. Procédé (2) selon l'une quelconque des revendications 5 à 8, dans lequel le risque d'inflammation est en outre basé sur des données enregistrées sur des caractéristiques du réservoir de gaz combustible (12), lesquelles caractéristiques comprennent des données sur au moins un élément parmi une structure du réservoir de gaz combustible (12) comprenant le volume de gaz combustible, un matériau du réservoir de gaz combustible, la présence d'un dispositif de décharge de température/pression, une orientation du réservoir de gaz combustible (12), et/ou une position relative du réservoir de gaz combustible (12).

10. Procédé (2) selon l'une quelconque des revendications 5 à 9, comprenant en outre la fermeture (S5) de la soupape (14) si le risque estimé d'inflammation est inférieur à une valeur seuil prédéterminée.

11. Unité de commande (3) comprenant un dispositif processeur (502) configuré pour exécuter le procédé (2) selon l'une quelconque des revendications 4 à 10.

12. Produit de programme informatique (520) comprenant un code de programme pour réaliser, lorsqu'il est exécuté par le dispositif de processeur (502) selon la revendication 11, le procédé (2) selon l'une quelconque des revendications 4 à 10.

13. Système de commande (5) comprenant une ou plusieurs unités de commande (3) configurées pour exécuter le procédé selon l'une quelconque des revendications 4 à 10.

14. Support de stockage lisible par ordinateur non transitoire (514) comprenant des instructions qui, lorsqu'elles sont exécutées par le dispositif processeur (502) selon la revendication 11, amènent le dispositif de processeur (502) à mettre en œuvre le procédé (2) selon l'une quelconque des revendications 4 à 10.

15. Véhicule (7) comprenant l'agencement de réservoir de gaz combustible (1) selon l'une quelconque des revendications 1-3 et l'unité de commande (3) selon la revendication 11.

16. Véhicule (7) selon la revendication 14, ayant en outre un système de stockage d'énergie électrique (20) et une unité de commande de système de stockage d'énergie électrique (22) connectée de manière à communiquer avec l'agencement de réservoir de gaz combustible (1).
